# EUROPÄISCHE PATENTSCHRIFT

(11) **EP 3 198 667 B1**
(45) Veröffentlichungstag und Bekanntmachung des Hinweises auf die Patenterteilung: **07.08.2019**
(21) Anmeldenummer: 15774535.7
(22) Anmeldetag: 22.09.2015
(51) Int. Cl.: H01M 2/10, H01M 10/42

(54) **BATTERIESYSTEM**
BATTERY SYSTEM
SYSTÈME DE BATTERIE

(30) Priorität: 26.09.2014 DE 102014114019
(43) Veröffentlichungstag der Anmeldung: 02.08.2017
(73) Patentinhaber: Obrist Technologies GmbH, 6890 Lustenau (AT)
(72) Erfinder: OBRIST, Frank, A-6900 Bregenz (AT); GRAZ, Martin, A-6890 Lustenau (AT); BONT, Jochen, A-6800 Feldkirch (AT)
(74) Vertreter: Kilchert, Jochen
(86) Internationale Anmeldenummer: PCT/EP2015/071630
(87) Internationale Veröffentlichungsnummer: WO 2016/046145

(56) Entgegenhaltungen:
- WO-A1-2013/120770
- US-A1- 2012 070 700

## Beschreibung

Die Erfindung betrifft ein Batteriesystem, insbesondere für einen Hybridantrieb, gemäß dem Oberbegriff des Patentanspruchs 1. Ferner betrifft die Erfindung ein Kraftfahrzeug mit einem derartigen Batteriesystem sowie ein Herstellungsverfahren. Ein Batteriesystem der eingangs genannten Art ist beispielsweise aus der auf die Anmelderin zurückgehenden EP 2 744 034 A1 bekannt.

Die vorgenannte EP 2 744 034 A1 beschreibt ein Batteriesystem, welches mehrere innerhalb eines Gehäuses angeordnete Zellenblöcke aus Batteriezellen aufweist. Zwischen den Zellenblöcken und dem Gehäuse ist eine Drucktasche angeordnet, die mit Luft oder Stickstoff befüllt werden kann. Im Allgemeinen ist also ein Behältnis mit einem veränderbaren Innenvolumen vorgesehen, das mit einem kompressiblen Medium gefüllt ist, um den Zellenblock gegenüber dem Gehäuse zu verspannen. WO 2013/120770 A1 offenbart ein Batteriesystem, mit einem Gehäuse und einem Zellenblock, wobei zwischen dem Zellenblock und wenigstens einer Gehäusewand ein Druckbeutel, mit einem veränderbaren Innenvolumen angeordnet ist, mit dem der Zellenblock gegenüber dem Gehäuse verspannbar ist; das Behältnis ist mit einem aushärtbaren oder ausgehärteten Medium gefüllt. Obwohl diese Art der Verspannung der einzelnen Bauteile des Batteriesystems durchaus vorteilhaft ist, hat sich im Zuge der Weiterentwicklung des Batteriesystems herausgestellt, dass für den Serieneinsatz des Batteriesystems Risiken bestehen. Beispielsweise besteht die Gefahr, dass sich der Druck innerhalb der Drucktasche aufgrund von Temperaturschwankungen ändert und somit unterschiedliche Spannkräfte auf die Zellenblöcke einwirken. Außerdem besteht die Gefahr, dass die Drucktasche, beispielsweise durch Alterungseffekte, undicht wird und somit ihre Anpressfunktion verliert. Insgesamt kann also keine langfristig stabile Verspannung innerhalb des Batteriesystems gewährleistet werden.

Die Aufgabe der Erfindung besteht darin, ein Batteriesystem anzugeben, das mit einer dauerhaft stabilen Verspannung der einzelnen Bauteile versehen ist. Ferner besteht die Aufgabe der Erfindung darin, ein Kraftfahrzeug mit einem derartigen Batteriesystem sowie ein Verfahren zur Montage des Batteriesystems sowie zur Herstellung eines Druckbeutels für das Batteriesystem anzugeben. Erfindungsgemäß wird diese Aufgabe im Hinblick auf das Batteriesystem durch den Gegenstand des Patentanspruchs 1, im Hinblick auf das Kraftfahrzeug durch den Gegenstand des Patentanspruchs 12 und im Hinblick auf das Montageverfahren für das Batteriesystem durch den Gegenstand des Patentanspruchs 13 gelöst.

Der Erfindung liegt der Gedanke zu Grunde, ein Batteriesystem, insbesondere für einen Hybridantrieb, anzugeben, wobei das Batteriesystem ein Gehäuse und mehrere innerhalb des Gehäuses angeordnete Batteriezellen umfasst. Die Batteriezellen sind zu einem Zellenblock zusammengefasst. Zwischen dem Zellenblock und wenigstens einer Gehäusewand des Gehäuses ist ein Behältnis mit einem veränderbaren Innenvolumen angeordnet. Mit dem Behältnis ist der Zellenblock gegenüber dem Gehäuse verspannbar. Erfindungsgemäß ist das Behältnis mit einem aushärtbaren oder ausgehärteten Kunststoff gefüllt.

Bei der vorliegenden Weiterentwicklung des eingangs beschriebenen Batteriesystems wird das Behältnis mit dem veränderbaren Innenvolumen mit einem Medium gefüllt, das aushärtbar ist. Dies erfolgt vorzugsweise unter einem Druck, so dass bei der Montage des Batteriesystems eine Vorspannung auf die Zellenblöcke aufgebracht wird. Insbesondere werden die Zellenblöcke gegenüber der Gehäusewand verspannt. Durch die Verwendung eines aushärtbaren Mediums wird erreicht, dass die Vorspannung nach dem Aushärten des Mediums konstant auf den Zellenblock einwirkt. Das ausgehärtete Medium ist vorzugsweise inkompressibel, so dass beispielsweise Temperaturänderungen kaum Einfluss auf die Druckbelastung für die Zellenblöcke haben. Schließlich ist auch die Gefahr einer Leckage gebannt, da das ausgehärtete Medium formstabil ist. Selbst bei einer Beschädigung des Behältnisses bleibt also der Vorspanndruck aufrechterhalten.

Das Behältnis ist erfindungsgemäß ein Druckbeutel. Der Druckbeutel kann insbesondere aus zwei an ihren Rändern verschweißten Folien gebildet sein. Das Behältnis ist als Druckbeutel besonders einfach und kostengünstig herstellbar.

Vorteilhafterweise weist der Druckbeutel eine Geometrie auf, die sich in einen Mittelbereich, zwei Randbereiche und einen Frontbereich unterteilt, wobei der Frontbereich von einem der Randbereiche ausgeht und die Randbereiche durch den Mittelbereich voneinander getrennt sind. Dadurch ist der Druckbeutel vorteilhaft zwischen Zellenblock und Gehäusewand angeordnet, so dass die Anpresskraft gleichmäßig verteilt ist.

Der Zellenblock ist vorteilhafterweise quaderförmig ausgebildet und weist eine Oberseite und eine Unterseite, zwei gegenüberliegende Querseiten und zwei Stirnseiten auf. Die Form ist vorteilhaft für die Montage, da der Zellenblock an den Druckbeutel und das Gehäuse angepasst ist. Alternativ sind andere geeignete Formen denkbar.

Erfindungsgemäß ist die Gehäusewand des Batteriesystems nach außen verformt, insbesondere gewölbt. Dabei übt die Gehäusewand eine in das Gehäuseinnere gerichtete Spannkraft auf den Zellenblock aus. Die Spannkraft wird insbesondere über das Behältnis bzw. über den Druckbeutel auf den Zellenblock ausgeübt. Die Vorspannkraft, die dauerhaft auf den Zellenblock einwirkt, geht also nicht von dem Behältnis bzw. dem aushärtbaren Medium aus, sondern wird dauerhaft durch das Gehäuse aufgebracht. Das aushärtbare Medium, welches unter Druck in das Behältnis bzw. den Druckbeutel gefüllt wird, verformt die Gehäusewand elastisch, wobei die Rückstellkräfte der Gehäusewand zu einer Spannkraft führen, die in das Gehäuseinnere gerichtet ist. Die Spannkraft wird von dem Behältnis bzw. dem Druckbeutel, das bzw. der formstabil mit dem ausgehärteten Medium gefüllt ist, an den Zellenblock übertragen. Dieses Prinzip zur Aufbringung einer Vorspannkraft auf den Zellenblock ist besonders dauerhaltbar. Die nach außen verformte Gehäusewand wirkt im Wesentlichen wie eine Blattfeder und drückt auf das mit dem ausgehärteten Medium gefüllte Behältnis, welches diese Spannkraft an den Zellenblock weitergibt.

Das Behältnis, insbesondere der Druckbeutel, kann vier Seiten des Zellenblocks ummanteln. Insbesondere kann vorgesehen sein, dass das Behältnis bzw. der Druckbeutel eine Oberseite, eine Unterseite, eine Querseite und eine Stirnseite des Zellenblocks ummantelt. Diese Anordnung des Behältnisses bzw. Druckbeutels ist besonders effizient, um einerseits eine Vorspannung auf den Zellenblock von allen Seiten zu erreichen und andererseits die Konstruktion des Behältnisses bzw. des Druckbeutels möglichst einfach zu gestalten. Insbesondere die Anordnung des Behältnisses bzw. Druckbeutels an den gegenüberliegenden Ober- und Unterseiten des Zellenblocks führt zu Vorteilen bei der Montage des Batteriesystems. Durch die zweiseitige Anordnung des Behältnisses bzw. Druckbeutels wird sichergestellt dass sich der Zellenblock beim Befüllen des Behältnisses bzw. Druckbeutels mit dem aushärtbaren Medium im Gehäuse nicht verschiebt.

Vorzugsweise weist das Behältnis bzw. der Druckbeutel eine Druckfestigkeit von wenigstens 1,5 bar auf. Besonders bevorzugt ist es, wenn die Druckfestigkeit des Behältnisses bzw. des Druckbeutels wenigstens 2 bar, insbesondere wenigstens 2,5 bar entspricht. Somit ist sichergestellt, dass das Behältnis bzw. der Druckbeutel einer Druckeinwirkung durch das aushärtbare Medium solange standhält, bis das Medium vollständig ausgehärtet ist.

Eine besonders einfache Herstellung des Behältnisses, insbesondere des Druckbeutels, wird dadurch erreicht, dass das Behältnis durch zwei randseitig miteinander verschweißte Verbundfolien gebildet ist. Die beiden Verbundfolien können im Wesentlichen denselben Schichtaufbau aufweisen bzw. identisch ausgebildet sein, um das Produktionsverfahren weiter zu vereinfachen.

Vorteilhafterweise weisen die Verbundfolien jeweils eine Verbindungsschicht, insbesondere aus Polypropylen, und eine Tragschicht, insbesondere aus Polyamid, auf. Es ist zweckmäßig, wenn die Verbindungsschicht schweißbar ist, wofür sich Polypropylen besonders gut eignet. Die Tragschicht dient insbesondere der Stabilisierung bzw. der Strukturbildung der Verbundfolie. Bei der Produktion des Behältnisses bzw. Druckbeutels werden die beiden Verbundfolien vorzugsweise mit ihren Verbindungsschichten aufeinander angeordnet und durch einen Laserstrahl miteinander verschweißt. Dabei kann ein besonders schnelles Scanner-Laserschweißverfahren zum Einsatz gelangen, wodurch der Produktionsprozess für das Behältnis bzw. den Druckbeutel beschleunigt wird.

Das Behältnis bzw. der Druckbeutel umfasst vorzugsweise ein Zuführventil. Das Zuführventil ist an einer Stirnseite des Zellenblocks anordenbar oder angeordnet. Das Zuführventil kann ein Klemmventil oder ein Rückschlagventil sein. Die Anordnung des Zuführventils an einer Stirnseite des Zellenblocks ist aus Herstellungsgründen vorteilhaft. So kann der Zellenblock mit dem ungefüllten Behältnis bzw. Druckbeutel in das Gehäuse des Batteriesystems eingeschoben werden. Anschließend kann über eine stirnseitige Öffnung des Gehäuses das aushärtbare Medium in das Behältnis eingefüllt werden. Das Behältnis weitet sich dabei auf und dehnt die Gehäusewand des Gehäuses, so dass sich diese nach außen wölbt und vorgespannt wird. Sobald eine ausreichende Menge an aushärtbarem Medium in das Behältnis eingefüllt ist, kann ein Zuführschlauch für das aushärtbare Medium vom Zuführventil entfernt werden. Wenn das Zuführventil als Rückschlagventil ausgebildet ist, verhindert dieses selbsttätig ein Austreten des Mediums. Das Gehäuse kann anschließend stirnseitig mit einem Abschlussdeckel verschlossen werden, so dass das Batteriesystem fertig montiert ist.

Das aushärtbare oder ausgehärtete Medium ist vorzugsweise ein Kunststoff. Insbesondere kann das Medium ein Schaumstoff, vorzugsweise ein hochfester Schaumstoff, ein Harz, vorzugsweise ein Epoxidharz, oder ein Gel sein. Die Verwendung eines Schaumstoffs hat den besonderen Vorteil, dass nach dem Einfüllen des Mediums dieses sich selbsttätig aufweitet und zusätzlichen Druck auf die Gehäusewand ausübt, um diese vorzuspannen. Demgegenüber hat ein Harz Vorteile hinsichtlich der Leckagesicherheit. Selbst wenn das Behältnis bzw. der Druckbeutel beispielsweise aus Alterungsgründen beschädigt bzw. durchlässig wird, bildet das Harz einen soliden Block, der die Vorspannung auf die Gehäusewand aufrechterhält.

Das Gehäuse kann aus einem Stahlblech gebildet sein, das eine Wandstärke zwischen 2 mm und 5 mm aufweist. Insbesondere kann die Wandstärke des Stahlblechs zwischen 2,5 mm und 4 mm betragen. Besonders vorteilhaft ist die Verwendung eines Stahlblechs mit einer Wandstärke mit 3 mm. Das Stahlblech ist vorzugsweise aus Federstahl ausgebildet, um eine elastische Vorspannkraft auf den Zellenblock ausüben zu können. Vorgesehen ist insbesondere die Verwendung von hochfesten Feinkorn-Baustählen als Material für das Gehäuse. Generell sollte das für das Gehäuse verwendete Stahlblech eine Mindest-Streckgrenze R_{p0,2} von > 500 aufweisen. Die Zugfestigkeit Rₘ sollte wenigstens 400 betragen. Besonders gute elastische Eigenschaften, die zur Vorspannung des Zellenblocks geeignet sind, weist ein Stahl auf, der gemäß der Norm DIN EN 10027-2:2013-09 die Werkstoff-Nr. 1.0060 aufweist. Derartige Stähle sind auch unter dem Kurznamen ST60-2 bzw. E335 bekannt.

Gemäß einem nebengeordneten Aspekt beruht die Erfindung auf dem Gedanken, ein Kraftfahrzeug, insbesondere Hybridfahrzeug, mit wenigstens einem zuvor beschriebenen Batteriesystem anzugeben.

Ein weiterer nebengeordneter Aspekt der Erfindung betrifft ein Verfahren zur Montage des zuvor beschriebenen Batteriesystems. Bei dem erfindungsgemäßen Verfahren werden folgende Schritte ausgeführt:
a) Anordnen eines Mittelbereichs des Behältnisses, insbesondere des Druckbeutels, an einer Querseite eines Zellenblocks;
b) Umbiegen der über die Oberseite überstehenden Randbereiche des Behältnisses, insbesondere des Druckbeutels, und Anlegen jeweils eines Randbereichs an einer Oberseite und einer Unterseite des Zellenblocks;
c) Umbiegen eines über den Mittelbereich vorstehenden Frontbereichs des Behältnisses, insbesondere des Druckbeutels, und Anlegen des Frontbereichs an einer Stirnseite des Zellenblocks;
d) Anordnen des mit dem Behältnis, insbesondere dem Druckbeutel, ummantelten Zellenblocks in das Gehäuse;
e) Einfüllen eines aushärtbaren Mediums in das Behältnis, insbesondere in den Druckbeutel, unter Druck; und
f) Aushärten des Mediums.

Das erfindungsgemäße Verfahren ermöglicht es auf besonders einfache Art und Weise, ein Batteriesystem herzustellen, bei welchem die Zellenblöcke innerhalb des Gehäuses verspannt sind. Dabei wird die Spannkraft, die auf die Zellenblöcke wirkt, dauerhaft von dem Gehäuse ausgeübt. Das Einfüllen des aushärtbaren Mediums bewirkt zwar eine zeitweise Druckerhöhung im dem Behältnis, die durch das Medium verursacht wird. Zusätzlich kann weiterer Druck über den Aushärtvorgang des Mediums ausgeübt werden. Der Druck innerhalb des Behältnisses bewirkt eine Ausdehnung des Gehäuses, das auf diese Weise elastisch vorgespannt wird. Das Gehäuse bzw. die Gehäusewand drängt in den ursprünglichen Zustand zurück und übt so eine Spannkraft auf den Zellenblock aus.

Vorzugsweise erfolgt das Einfüllen des aushärtbaren Mediums bei einem Druck zwischen 0,3 bar und 2 bar. Insbesondere ist vorgesehen, dass der Druck beim Einfüllen des aushärtbaren Mediums zwischen 0,35 bar und 1,5 bar, insbesondere zwischen 0,4 bar und 1 bar, vorzugsweise zwischen 0,45 bar und 0,7 bar, insbesondere vorteilhaft bei einem Fülldruck von 0,5 bar, erfolgt.

Beim Einfüllen und/oder Aushärten des aushärtbaren Mediums wird das Gehäuse vorteilhafterweise elastisch verformt. Die elastische Verformung erfolgt insbesondere an den den Randbereichen des Behältnisses bzw. Druckbeutels zugeordneten Gehäusewänden. Konkret ist also vorgesehen, dass die Oberseite und die Unterseite des Gehäuses elastisch verformt werden, um eine Spannkraft auszulösen, die in das Gehäuseinnere wirkt.

Im Rahmen der vorliegenden Erfindung wird ferner ein Verfahren zur Herstellung eines Druckbeutels für ein eingangs beschriebenes Batteriesystem offenbart, bei dem zwei Verbundfolien im Wesentlichen deckungsgleich aufeinander angeordnet und an ihren Rändern miteinander verschweißt werden. Das Verschweißen erfolgt vorzugsweise durch einen Laserstrahl. Dieses Herstellungsverfahren ist besonders einfach und kostengünstig realisierbar und eignet sich daher gut für eine Serienfertigung.

Das Verschweißen der Ränder der Verbundfolien kann durch ein Scanner-Laserschweißverfahren erfolgen. Dabei kann auch vorgesehen sein, die Verbundfolien mit zwei Schweißnähten zu verbinden, wobei die Schweißnähte in einem konstanten Abstand zueinander verlaufen. Dies bildet einen zusätzlichen Schutz vor Leckage. Insbesondere wird dadurch eine Redundanz erzeugt, so dass eine Dichtigkeit des Druckbeutels auch sichergestellt ist, wenn eine der Schweißnähte lückenhaft ist.

Die Erfindung wird im Folgenden anhand eines Ausführungsbeispiels unter Bezugnahme auf die beigefügten, schematischen Zeichnungen näher erläutert. Darin zeigen
- Fig. 1: eine perspektivische Ansicht eines Behältnisses, insbesondere eines Druckbeutels, für das erfindungsgemäße Batteriesystem;
- Fig. 2: eine perspektivische Ansicht eines Zellenblocks eines erfindungsgemäßen Batteriesystems mit dem Behältnis bzw. Druckbeutel gemäß Fig. 1;
- Fig. 3: eine Vorderansicht des Zellenblocks gemäß Fig. 2;
- Fig. 4a: eine Querschnittsansicht durch das Gehäuse eines Batteriesystems mit dem Zellenblock gemäß Fig. 2 vor dem Einfüllen des aushärtbaren Mediums in den Druckbeutel;
- Fig. 4b: eine Querschnittsansicht durch das Gehäuse eines Batteriesystems mit dem Zellenblock gemäß Fig. 2 nach dem Einfüllen des aushärtbaren Mediums in den Druckbeutel; und
- Fig. 5: eine perspektivische Explosionsansicht eines Zellenblocks des Batteriesystems gemäß Fig. 2.

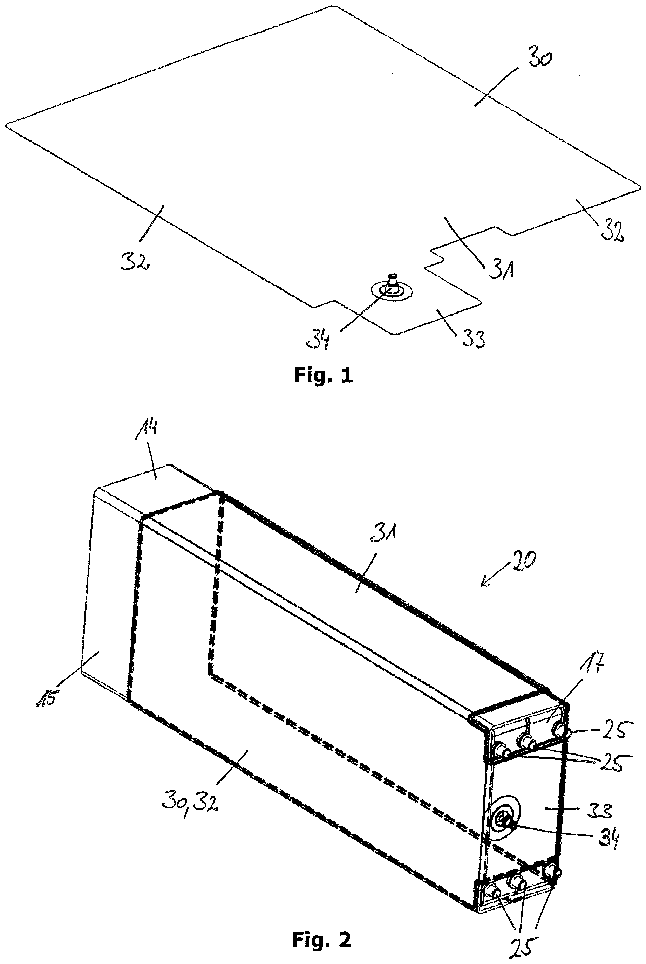

In Fig. 1 ist beispielhaft ein Behältnis mit einem veränderbaren Innenvolumen gezeigt, das vorzugsweise als Druckbeutel 30 ausgebildet ist. Der Druckbeutel 30 ist im Wesentlichen taschenartig bzw. kissenförmig ausgebildet und durch zwei Verbundfolien gebildet, die an ihren Rändern miteinander verschweißt sind. Der Druckbeutel 30 weist eine Geometrie auf, die sich in einen Mittelbereich 31, zwei Randbereiche 32 und einen Frontbereich 33 unterteilen lässt. Der Frontbereich 33 geht dabei von einem der Randbereiche 32 aus. Die Randbereiche 32 sind durch den Mittelbereich 31 voneinander getrennt. Im Frontbereich 33 ist ein Zuführventil 34 angeordnet. Das Zuführventil 34 ist im Wesentlichen als Rückschlagventil ausgebildet und fest mit dem Druckbeutel 30 verbunden, beispielsweise verklebt oder verschweißt.

Der Druckbeutel kann mit einem aushärtbaren Medium 35, vorzugsweise einem Kunststoff, gefüllt werden. Als aushärtbares Medium 35 kommt insbesondere ein Schaumstoff oder ein Harz, beispielsweise Epoxidharz, zum Einsatz. Dabei dehnt sich der Druckbeutel 30 aus und gibt den Fülldruck des Mediums 35 in Form einer Vorspannkraft an umgebende Bauteile ab. Insbesondere kann der Druckbeutel 30 in Folge des Fülldrucks des Mediums 35 eine Vorspannkraft auf ein Gehäuse 11 des Batteriesystems 10 ausüben.

Die Anordnung des Druckbeutels 30 in einem Batteriesystem 10 ist in Fig. 2 deutlich erkennbar. Fig. 2 zeigt eine perspektivische Ansicht auf einen Zellenblock 20 des Batteriesystems 10, das ferner ein Gehäuse 11 mit einer Gehäusewand 12 aufweist. Angedeutet ist in Fig. 2 der Druckbeutel 30, der um den Zellenblock 20 herum angeordnet ist. Der Druckbeutel 30 gemäß Fig. 2 entspricht dem Druckbeutel, wie er in Fig. 1 dargestellt ist. Insbesondere umfasst der Druckbeutel 30 die beiden Randbereiche 32, den Mittelbereich 31 und den Frontbereich 33.

Im montierten Zustand des Batteriesystems 10 erstreckt sich der Mittelbereich 31 des Druckbeutels 30 über eine Querseite 14 des Zellenblocks 20.

Die beiden Randbereiche 32 erstrecken sich jeweils über eine Oberseite 15 und eine Unterseite 16 des Zellenblocks 20. Der an einem der Randbereiche 32 angeordnete Frontbereich 33 ist auf der Stirnseite 17 des Zellenblocks 20 aufliegend angeordnet. Im Wesentlichen ist der Druckbeutel 30 also über vier Seiten um den Zellenblock 20 gefaltet und kann diesen im Gehäuse 11 effizient verspannen.

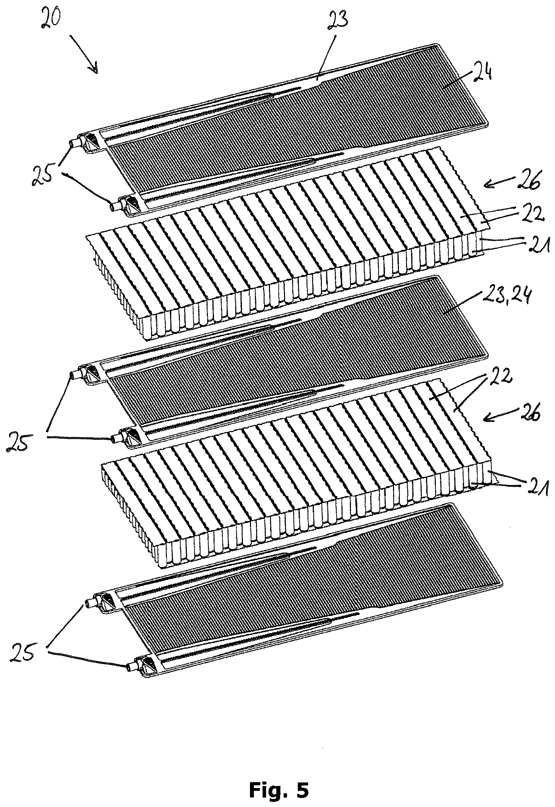

Wie in Fig. 2 ebenfalls erkennbar ist, sind an der Stirnseite 17 des Zellenblocks 20 mehrere Fluidanschlüsse 25 angeordnet. Die Fluidanschlüsse 25 sind mit innerhalb des Zellenblocks 20 angeordneten Kühlelementen 23 gekoppelt, die zur Kühlung der Batteriezellen 21 genutzt werden. Der innere Aufbau des Zellenblocks 20 wird im Zusammenhang mit Fig. 5 näher erläutert.

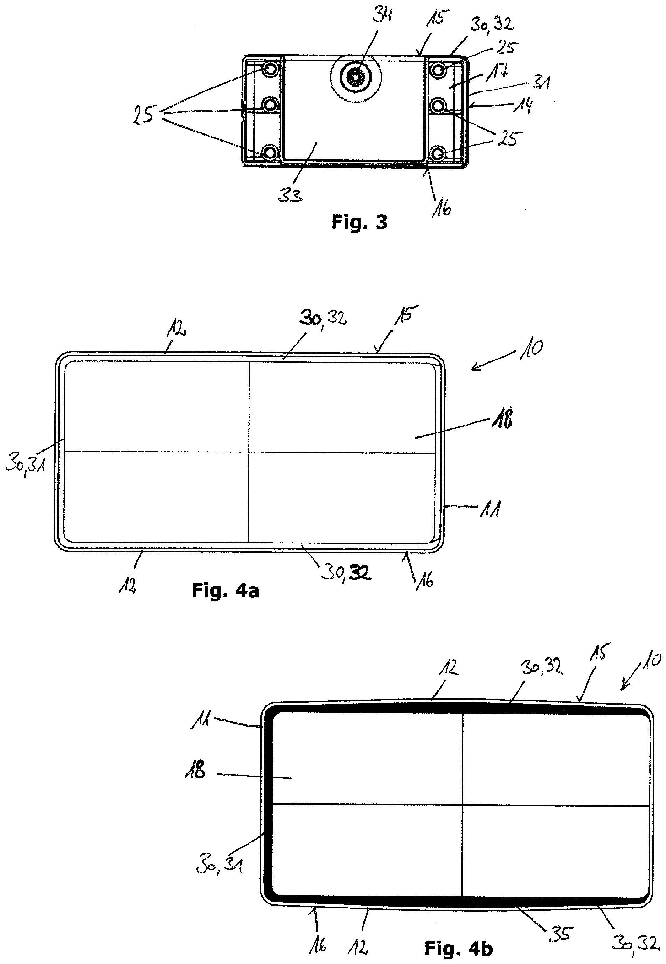

Fig. 3 zeigt den Zellenblock 20 in einer Vorderansicht, wobei nochmals die Ummantelung des Zellenblocks 20 durch den Druckbeutel 30 erkennbar ist. Das Zuführventil 34 ist am Frontbereich 33 und somit auf derselben Stirnseite 17 angeordnet, die auch die Fluidanschlüsse 25 trägt. Somit sind alle mit einer Flüssigkeit zu versorgenden Anschlüsse bzw. Zuführventile 34 auf derselben Seite des Zellenblocks 20 vorgesehen. Die elektrischen Anschlüsse des Zellenblocks 20, der vorzugsweise als Hochvolt-Zellenblock 20 ausgebildet ist, sind vorteilhafterweise auf einer gegenüberliegenden Stirnseite des Zellenblocks 20 angeordnet. So ist eine effiziente Trennung zwischen Hochvolt-Bereich und Fluidanschluss-Bereich ermöglicht.

Die Querschnittsansicht gemäß den Figuren 4a und 4b verdeutlicht das Prinzip der Erfindung, das bei dem dargestellten Ausführungsbeispiel verwirklicht ist. Dabei zeigt Fig. 4a das Gehäuse 11 mit einem Innenraum 18, in welchem ein Zellenblock 20 angeordnet sein kann und einen ungefüllten Druckbeutel 30, der um die Oberseite 15, die Unterseite 16 und die Querseite 14 gelegt ist.

Generell ist bei der Erfindung vorgesehen, dass der Druckbeutel 30 durch ein aushärtbares Medium 35 befüllt wird, welches mit der Zeit, vorzugsweise in einem Zeitraum von wenigen Stunden, aushärtet und somit eine feste Vorspannschicht bildet. Das aushärtbare, zunächst flüssige Medium 35 wird unter einem Druck in den Druckbeutel 30 eingebracht, nachdem der Druckbeutel 30 um den Zellenblock 20 angeordnet und mit dem Zellenblock 20 in das Gehäuse 11 eingeschoben ist. Durch den Druck innerhalb des Druckbeutels 30 verformt sich das Gehäuse 11. Dies ist in Fig. 4b anschaulich dargestellt. Darin ist derselbe Schnitt wie in Fig. 4a gezeigt, wobei der Druckbeutel nun mit dem aushärtbaren Medium befüllt ist. Es ergibt sich eine Auswölbung der Gehäusewand 12, insbesondere auf der Oberseite 15 und der Unterseite 16.

Das Gehäuse 11 weist eine Gehäusewand 12 auf, die vorzugsweise aus einem Stahlblech gebildet ist. Das Stahlblech dehnt sich im elastischen Bereich unter dem Druck im Druckbeutel 30 aus bzw. wölbt sich nach außen. Dadurch wird das Stahlblech bzw. die Gehäusewand 12 federartig vorgespannt. Es resultiert eine Rückstellkraft, die als Spannkraft in den Innenraum 18 des Gehäuses 11 hineinwirkt. Dabei werden insbesondere die relativ breiteren Ober- und Unterseiten 15, 16 des Gehäuses 11 nach außen gewölbt. Die Auswölbung der Ober- und Unterseiten 15, 16 bewirkt gleichzeitig, dass auf die Querseite 14, entlang der sich der Mittelbereich 31 des Druckbeutels 30 erstreckt, eine Streckkraft ausgeübt wird, die einer Auswölbung der Querseite 14 entgegenwirkt. Wie in Fig. 4b erkennbar ist, wird durch das Einfüllen des aushärtbaren Mediums die Querseite 14 des Gehäuses 11 daher nicht wesentlich verformt.

Da entlang der Oberseite 15 und der Unterseite 16 die beiden im Wesentlichen gleichvolumigen Randbereiche 32 des Druckbeutels 30 angeordnet sind, wird vermieden, dass beim Einfüllen des aushärtbaren Mediums 35 in den Druckbeutel 30 der Zellenblock 20 innerhalb des Gehäuses verschoben wird. Die Oberseite 15 und die Unterseite 16 werden durch den Druck im Druckbeutel 30 ausgewölbt, wobei die Wölbung im Scheitelpunkt gegenüber der ursprünglich flachen Ausrichtung der Oberseite 15 bzw. Unterseite 16 eine Höhe aufweisen, die wenigstens der Wandstärke der Gehäusewand 12 entspricht. Mit anderen Worten kann die Wölbung im Scheitelpunkt eine Höhe aufweisen, die wenigstens 3 mm beträgt. In der Praxis hat sich gezeigt, dass die Höhe des Auswölbungen im Scheitelpunkt etwa 5 mm beträgt, so dass die Gesamthöhe des Gehäuses nach dem Einfüllen des aushärtbaren Mediums (Fig. 4b) um etwa 10 mm größer als vor dem Einfüllen des aushärtbaren Mediums (Fig. 4a) ist.

In Fig. 5 ist zur Verdeutlichung der Aufbau eines Zellenblocks 20 dargestellt, der in das Gehäuse 11 des Batteriesystems 10 integriert ist. Der Zellenblock 20 umfasst zwei Batterielagen 26, die aus mehreren Batteriezellen 21 zusammengestellt sind. Die Batteriezellen 21 sind als Rundzellen ausgebildet und an ihren Polen durch Kontaktplatten 22 mechanisch und elektrisch miteinander verbunden. Dabei sind die Batteriezellen 21 in Parallel- und Reihenschaltung miteinander gekoppelt. Ferner weist der Zellenblock 20 drei Kühlelemente 23 in Form von Kühlbeuteln auf, wobei jeweils zwei Kühlelemente 23 eine Batterielage 26 zwischen sich einschließen. Die Kühlelemente 23 liegen dabei mit wärmeleitendem Kontakt auf den Kontaktplatten 22 auf. An ihren Längsenden umfassen die Kühlelemente 23 jeweils zwei Fluidanschlüsse 25, die den Anschluss der Kühlelemente 23 an einen Kühlkreislauf ermöglichen.

Innerhalb der Kühlelemente 23 ist eine Kanalstruktur 24 vorgesehen, die für eine gleichmäßige Durchströmung der Kühlelemente 23 und somit einen gleichmäßigen Wärmeabtransport sorgt. Die Kühlelemente 23 bilden gemeinsam mit den Batteriezellen 21 den Zellenblock 20. Dieser wird bei der Montage des Batteriesystems 10 von dem Druckbeutel 30 an vier Seiten ummantelt und gemeinsam mit dem Druckbeutel 30 in das Gehäuse 11 eingeschoben. Der Druckbeutel 30 wird dann mit dem aushärtbaren Medium 35 befüllt, wobei ein Fülldruck eingestellt wird, der zu einer Auswölbung der Gehäusewände 12 führt. Das Gehäuse 11 bewirkt aufgrund von Rückstellkräften in der Gehäusewand 12 eine Spannkraft, die auf den Zellenblock 20 einwirkt und so einen sicheren, wärmeleitenden Kontakt zwischen den Kühlelementen 23 und den Batterielagen 26 gewährleistet.

### Bezugszeichenliste

- 10: Batteriesystem
- 11: Gehäuse
- 12: Gehäusewand
- 14: Querseite
- 15: Oberseite
- 16: Unterseite
- 17: Stirnseite
- 18: Innenraum
- 20: Zellenblock
- 21: Batteriezelle
- 22: Kontaktplatte
- 23: Kühlelement
- 24: Kanalstruktur
- 25: Fluidanschluss
- 26: Batterielage
- 30: Druckbeutel
- 31: Mittelbereich
- 32: Randbereich
- 33: Frontbereich
- 34: Zuführventil

## Patentansprüche

1. Batteriesystem (10), insbesondere für einen Hybridantrieb, mit einem Gehäuse (11) und mehreren innerhalb des Gehäuses (11) angeordneten Batteriezellen (21), die zu einem Zellenblock (20) zusammengefasst sind, wobei zwischen dem Zellenblock (20) und wenigstens einer Gehäusewand (12) ein Druckbeutel mit einem veränderbaren Innenvolumen angeordnet ist, mit dem der Zellenblock (20) gegenüber dem Gehäuse (11) verspannbar ist, und wobei der Druckbeutel mit einem aushärtbaren oder ausgehärteten Medium gefüllt ist,
**dadurch gekennzeichnet, dass**
die Gehäusewand (12) nach außen verformt, insbesondere gewölbt, ist und eine in das Gehäuseinnere gerichtete Spannkraft über den Druckbeutel (30) auf den Zellenblock (20) ausübt.

2. Batteriesystem nach Anspruch 1 ,
**dadurch gekennzeichnet, dass**
der Druckbeutel (30) eine Geometrie aufweist, die sich in einen Mittelbereich (31), zwei Randbereiche (32) und einen Frontbereich (33) unterteilt, wobei der Frontbereich (33) von einem der Randbereiche (32) ausgeht und die Randbereiche (32) durch den Mittelbereich (31) voneinander getrennt sind.

3. Batteriesystem nach Anspruch 1 oder 2,
**dadurch gekennzeichnet, dass**
der Zellenblock (20) quaderförmig ausgebildet ist und eine Oberseite (15) und eine Unterseite (16), zwei gegenüberliegende Querseiten (14) und zwei Stirnseiten (17) aufweist.

4. Batteriesystem (10) nach einem der vorhergehenden Ansprüche,
**dadurch gekennzeichnet, dass**
der Druckbeutel (30) eine Querseite (14), eine Oberseite (15), eine Unterseite (16) und eine Stirnseite (17) des Zellenblocks (20) ummantelt.

5. Batteriesystem (10) nach einem der vorhergehenden Ansprüche,
**dadurch gekennzeichnet, dass**
der Druckbeutel (30) eine Druckfestigkeit von wenigstens 1,5 bar, insbesondere wenigstens 2 bar, insbesondere wenigstens 2,5 bar, aufweist.

6. Batteriesystem (10) nach einem der vorhergehenden Ansprüche,
**dadurch gekennzeichnet, dass**
der Druckbeutel (30) durch zwei randseitig miteinander verschweißte Verbundfolien gebildet ist.

7. Batteriesystem (10) nach Anspruch 6,
**dadurch gekennzeichnet, dass**
die Verbundfolien jeweils eine Verbindungsschicht, insbesondere aus Polypropylen, und eine Tragschicht, insbesondere aus Polyamid, aufweisen.

8. Batteriesystem (10) nach einem der vorhergehenden Ansprüche,
**dadurch gekennzeichnet, dass**
der Druckbeutel (30) ein Zuführventil (34) umfasst, das an einer Stirnseite (17) des Zellenblocks (20) anordenbar oder angeordnet ist.

9. Batteriesystem nach Anspruch 8,
**dadurch gekennzeichnet, dass**
das Zuführventil (34) ein Klemmventil oder ein Rückschlagventil ist.

10. Batteriesystem (10) nach einem der vorhergehenden Ansprüche,
**dadurch gekennzeichnet, dass**
das Medium ein Kunststoff, insbesondere ein Schaumstoff, ein Harz, vorzugsweise ein Epoxydharz, oder ein Gel, ist.

11. Batteriesystem (10) nach einem der vorhergehenden Ansprüche,
**dadurch gekennzeichnet, dass**
das Gehäuse (11) aus einem Stahlblech gebildet ist, das eine Wandstärke zwischen 2 mm und 5 mm, insbesondere zwischen 2,5 mm und 4 mm, insbesondere von 3 mm, aufweist.

12. Kraftfahrzeug, insbesondere Hybridfahrzeug, mit wenigstens einem Batteriesystem (10) nach einem der vorhergehenden Ansprüche.

13. Verfahren zur Montage eines Batteriesystems (10) nach einem der vorhergehenden Ansprüche, wobei die folgenden Schritte ausgeführt werden:
a) Anordnen eines Mittelbereichs (31) des Druckbeutels (30) an einer Querseite (14) eines Zellenblocks (20);
b) Umbiegen der über eine Oberseite (15) und eine Unterseite (16) des Zellenblocks (20) überstehenden Randbereiche (32) des Druckbeutels (30) und Anlegen jeweils eines Randbereichs (32) an der Oberseite (15) und der Unterseite (16) des Zellenblocks (20);
c) Umbiegen eines über den Mittelbereich (31) vorstehenden Frontbereichs (33) des Druckbeutels (30) und Anlegen des Frontbereichs (33) an einer Stirnseite (17) des Zellenblocks (20);
d) Anordnen des mit dem Druckbeutel (30) ummantelten Zellenblocks (20) in das Gehäuse (11);
e) Einfüllen eines aushärtbaren Mediums in den Druckbeutel (30) unter Druck; und
f) Aushärten des Mediums, **dadurch gekennzeichnet, dass** beim Einfüllen und/oder Aushärten des aushärtbaren Mediums das Gehäuse elastisch verformt wird, um eine Spannkraft auszulösen, die in das Gehäuseinnere wirkt.

14. Verfahren zur Montage eines Batteriesystems (10) nach Anspruch 13,
**dadurch gekennzeichnet, dass**
das Einfüllen des aushärtbaren Mediums bei einem Druck zwischen 0,3 bar und 2 bar, insbesondere zwischen 0,35 bar und 1,5 bar, insbesondere zwischen 0,4 bar und 1 bar, insbesondere zwischen 0,45 bar und 0,7 bar, insbesondere bei einem Fülldruck von 0,5 bar, erfolgt.

15. Verfahren zur Montage eines Batteriesystems (10) nach Anspruch 13 oder 14,
**dadurch gekennzeichnet, dass**
das Gehäuse (11) beim Einfüllen und/oder Aushärten des aushärtbaren Mediums zumindest an den den Randbereichen (32) des Druckbeutels (30) zugeordneten Gehäusewänden (12) elastisch verformt wird.

## Claims

1. A battery system (10), in particular for a hybrid drive, with a housing (11) and a plurality of battery cells (21) arranged inside the housing (11), wherein said battery cells (21) are combined into a cell block (20), wherein a pressure bag having an adjustable interior volume is arranged between the cell block (20) and least one housing wall (12), by means of which pressure bag the cell block (20) can be braced against the housing (11), and wherein the pressure bag is filled with a curable or cured medium, **characterized in that** the housing wall (12) is outwardly deformed, in particular is curved, and exerts a clamping force directed into the interior of the housing onto the cell block (20) via the pressure bag (30).

2. The battery system according to Claim 1, **characterized in that** the pressure bag (30) has a geometry, which is divided into a middle region (31), two edge regions (32) and a front region (33), wherein the front region (33) extends from one of the edge regions (32) and the edge regions (32) are separated from each other by the middle region (31).

3. The battery system according to Claim 1 or 2, **characterized in that** the cell block (20) is designed in the shape of a cuboid having an upper side (15) and a lower side (16), as well as two opposing transverse sides (14) and two end sides (17).

4. The battery system (10) according to any one of the preceding claims, **characterized in that** the pressure bag (30) encases a transverse side (14), an upper side (15), a lower side (16) and an end side (17) of the cell block (20).

5. The battery system (10) according to any one of the preceding claims, **characterized in that** the pressure bag (30) has a compressive strength of at least 1.5 bar, in particular at least 2 bar, in particular at least 2.5 bar.

6. The battery system (10) according to any one of the preceding claims, **characterized in that** the pressure bag (30) is formed by two composite films welded to one another at their respective edges.

7. The battery system (10) according to Claim 6, **characterized in that** each of the composite films has a connecting layer, in particular one of polypropylene, and a base layer, in particular one of polyamide.

8. The battery system (10) according to any one of the preceding claims, **characterized in that** the pressure bag (30) comprises a supply valve (34), which can be or is arranged on an end side (17) of the cell block (20) .

9. The battery system according to Claim 8, **characterized in that** the supply valve (34) is a pinch valve or a check valve.

10. The battery system (10) according to any one of the preceding claims, **characterized in that** the medium is a plastic, in particular a foam, a resin, preferably an epoxy resin, or a gel.

11. The battery system (10) according to any one of the preceding claims, **characterized in that** the housing (11) is formed from sheet steel, which has a wall thickness of between 2 mm and 5 mm, in particular between 2.5 mm and 4 mm, in particular of 3 mm.

12. A motor vehicle, in particular a hybrid vehicle, having at least one battery system (10) according to any one of the preceding claims.

13. A method for mounting a battery system (10) according to any one of the preceding claims, wherein the following steps are executed:
a) arranging a middle region (31) of the pressure bag (30) on a transverse side (14) of a cell block (20);
b) bending the edge regions (32) of the pressure bag (30), which protrude over an upper side (15) and a lower side (16) of the cell block (20), and placing the respective edge regions (32) flush against the upper side (15) and the lower side (16) of the cell block (20);
c) bending a front region (33) of the pressure bag (30), which protrudes over the middle region (31), and placing the front region (33) flush against the end side (17) of the cell block (20);
d) arranging the cell block (20) encased by the pressure bag (30) inside the housing (11);
e) filling a curable medium into the pressure bag (30) under pressure; and
f) curing the medium,
said method **characterized in that** the housing is elastically deformed during the filling with and/or curing of the curable medium in order to create a clamping force directed into the interior of the housing.

14. The method for mounting a battery system (10) according to Claim 13, **characterized in that** the filling of the curable medium is executed under a pressure of between 0.3 bar and 2 bar, in particular between 0.35 bar and 1.5 bar, in particular between 0.4 bar and 1 bar, in particular between 0.45 bar and 0.7 bar, in particular under a filling pressure of 0.5 bar.

15. The method for mounting a battery system (10) according to Claim 13 or 14, **characterized in that** the housing (11) is elastically deformed at least at the housing walls (12) associated with the edge regions (32) of the pressure bag (30) during the filling with and/or curing of the curable medium.

## Revendications

1. Système de batterie (10), en particulier pour un entraînement hybride, avec un boîtier (11) et plusieurs éléments de batterie (21) disposés à l'intérieur du boîtier (11), lesquels éléments sont regroupés en un bloc d'éléments (20), dans lequel une poche de compression avec un volume intérieur variable est disposée entre le bloc d'éléments (20) et au moins une paroi de boîtier (12), avec laquelle poche le bloc d'éléments (20) peut être serré par rapport au boîtier (11), et dans lequel la poche de compression est remplie avec une substance durcissable ou durcie, **caractérisé en ce que** la paroi de boîtier (12) est déformée vers l'extérieur, en particulier bombée, et exerce une force de serrage orientée vers l'intérieur du boîtier sur le bloc d'éléments (20) via la poche de compression (30).

2. Système de batterie selon la revendication 1,
**caractérisé en ce que** la poche de compression (30) présente une géométrie de subdivision en une zone médiane (31), deux zones de bord (32), et une zone frontale (33), dans lequel la zone frontale (33) part de l'une des zones de bord (32) et les zones de bord (32) sont séparées l'une de l'autre par la zone médiane (31).

3. Système de batterie selon la revendication 1 ou 2,
**caractérisé en ce que** le bloc d'éléments (20) est réalisé en forme de parallélépipède et présente un côté supérieur (15) et un côté inférieur (16), deux côtés transversaux (14) situés en vis-à-vis, et deux côtés frontaux (17).

4. Système de batterie (10) selon l'une des revendications précédentes,
**caractérisé en ce que** la poche de compression (30) enveloppe un côté transversal (14), un côté supérieur (15), un côté inférieur (16), et un côté frontal (17) du bloc d'éléments (20).

5. Système de batterie (10) selon l'une des revendications précédentes,
**caractérisé en ce que** la poche de compression (30) présente une résistance à la compression d'au moins 1,5 bars, en particulier d'au moins 2 bars, en particulier d'au moins 2,5 bars.

6. Système de batterie (10) selon l'une des revendications précédentes,
**caractérisé en ce que** la poche de compression (30) est formée par deux feuilles composites soudées ensemble du côté du bord.

7. Système de batterie (10) selon la revendication 6,
**caractérisé en ce que** les feuilles composites présentent respectivement une couche de liaison, en particulier en polypropylène, et une couche de support, en particulier en polyamide.

8. Système de batterie (10) selon l'une des revendications précédentes,
**caractérisé en ce que** la poche de compression (30) comprend une soupape d'alimentation (34) qui peut être disposée, ou est disposée, sur un côté frontal (17) du bloc d'éléments (20).

9. Système de batterie selon la revendication 8,
**caractérisé en ce que** la soupape d'alimentation (34) est une soupape de blocage ou une soupape de non-retour.

10. Système de batterie (10) selon l'une des revendications précédentes,
**caractérisé en ce que** la substance est une matière plastique, en particulier une mousse, une résine, de préférence une résine époxy, ou un gel.

11. Système de batterie (10) selon l'une des revendications précédentes,
**caractérisé en ce que** le boîtier (11) est formé par une tôle d'acier qui présente une épaisseur de paroi comprise entre 2 mm et 5 mm, en particulier entre 2,5 mm et 4 mm, en particulier de 3 mm.

12. Véhicule automobile, en particulier véhicule hybride, avec au moins un système de batterie (10) selon l'une des revendications précédentes.

13. Procédé pour le montage d'un système de batterie (10) selon l'une des revendications précédentes, dans lequel les étapes suivantes sont réalisées :
a) placer une zone médiane (31) de la poche de compression (30) contre un côté transversal (14) d'un bloc d'éléments (20) ;
b) replier les zones de bord (32) de la poche de compression (30) dépassant d'un côté supérieur (15) et d'un côté inférieur (16) du bloc d'éléments (20) et appliquer respectivement une zone de bord (32) sur le côté supérieur (15) et le côté inférieur (16) du bloc d'éléments (20) ;
c) replier une zone frontale (33) de la poche de compression (30) dépassant de la zone médiane (31) et appliquer la zone frontale (33) sur un côté frontal (17) du bloc d'éléments (20) ;
d) placer le bloc d'éléments (20) enveloppé par la poche de compression (30) dans le boîtier (11) ;
e) remplir sous pression la poche de compression (30) avec une substance durcissable ; et
f) faire durcir la substance,
**caractérisé en ce que**, lors du remplissage avec la substance durcissable et/ou du durcissement de celle-ci, le boîtier est déformé élastiquement pour déclencher une force de serrage qui agit sur l'intérieur du boîtier.

14. Procédé pour le montage d'un système de batterie (10) selon la revendication 13,
**caractérisé en ce que** le remplissage avec la substance durcissable s'effectue à une pression comprise entre 0,3 bar et 2 bars, en particulier entre 0,35 bar et 1,5 bars, en particulier entre 0,4 bar et 1 bar, en particulier entre 0,45 bar et 0,7 bar, en particulier à une pression de remplissage de 0,5 bars.

15. Procédé pour le montage d'un système de batterie (10) selon la revendication 13 ou 14,
**caractérisé en ce que**, lors du remplissage avec la substance durcissable et/ou du durcissement de celle-ci, le boîtier (11) est déformé élastiquement au moins au niveau des parois de boîtier (12) associées aux zones de bord (32) de la poche de compression (30).
